# FASCICULE DE BREVET EUROPEEN

(11) **EP 4 073 367 B1**
(45) Date de publication et mention de la délivrance du brevet: **21.10.2026**
(21) Numéro de dépôt: 20816525.8
(22) Date de dépôt: 07.12.2020
(51) Int. Cl.: F02C 7/32, F02C 7/36

(54) **GROUPE AUXILIAIRE DE PUISSANCE COMPRENANT UN GÉNÉRATEUR DE GAZ À ENTRAINEMENT DIRECT AVEC UN GÉNÉRATEUR ÉLECTRIQUE ET UN BOÎTIER D'ACCESSOIRES**
HILFSSTROMAGGREGAT MIT EINEM GASGENERATOR IN DIREKTER ANTRIEBSVERBINDUNG MIT EINEM ELEKTRISCHEN GENERATOR UND EINEM ZUBEHÖRGEHÄUSE
AUXILIARY POWER UNIT COMPRISING A GAS GENERATOR IN DIRECT-DRIVE CONNECTION WITH AN ELECTRIC GENERATOR, AND AN ACCESSORIES HOUSING

(30) Priorité: 13.12.2019 FR 1914417
(43) Date de publication de la demande: 19.10.2022
(73) Titulaire: Safran Power Units, 31200 Toulouse (FR)
(72) Inventeur: TUNZINI, Marc Daniel, 77550 MOISSY CRAMAYEL (FR); REAL, Denis Antoine Julien, 77550 MOISSY CRAMAYEL (FR)
(74) Mandataire: Casalonga
(86) Numéro de dépôt international: PCT/EP2020/084826
(87) Numéro de publication internationale: WO 2021/115996

(56) Documents cités:
- EP-A2- 2 452 879
- WO-A1-03/044328
- WO-A1-2018/055287
- US-A- 5 555 722
- US-A1- 2018 306 109

## Description

### Domaine technique de l'invention

La présente invention concerne le domaine des turbomachines, telles qu'un turboréacteur ou un turbopropulseur d'aéronef, et notamment les groupes auxiliaires de puissance dits « auxiliary power units », d'acronyme APU en termes anglo-saxons.

On entend par groupes auxiliaires de puissance, des turbogénérateurs capables de produire de l'énergie électrique ou également pneumatique à bord de l'aéronef, en entraînant entre autres des générateurs électriques.

### Etat de la technique antérieure

Les APU sont généralement utilisés pour alimenter en énergie électrique ou pneumatique différents systèmes lorsque l'aéronef est au sol ou en vol. Par exemple, un APU utilisé uniquement en mode turbogénérateur délivrera exclusivement de l'énergie électrique afin de contribuer à l'alimentation de la chaine de propulsion hybride d'un aéronef.

Les APU sont généralement positionnés à l'arrière de l'aéronef, notamment dans le cône de queue, et alimentés par le kérosène des réservoirs de l'aéronef.

Un APU de type à turbine à gaz comprend généralement un générateur de gaz dans lequel toute la puissance mécanique disponible est convertie en énergie électrique, un compresseur d'air monté sur l'axe principal du générateur de gaz et configuré pour fournir la puissance pneumatique nécessaire à l'aéronef. Un APU comprend en outre un boîtier d'accessoires, connu sous le nom de « accessory gearbox », d'acronyme AGB en termes anglo-saxons, contenant un mécanisme de train d'engrenages relié à différents équipements ou accessoires, tels que, par exemple le générateur électrique, les pompes à carburant, le groupe de lubrification, le démarreur, ou d'autres accessoires auxiliaires au moteur et à la génération de puissance de l'aéronef. L'APU comprend également une génératrice ou générateur électrique pour fournir de l'énergie électrique à bord de l'aéronef.

Les groupes auxiliaires de puissance peuvent également fournir une énergie pneumatique ou mécanique suivant des besoins spécifiques.

Il est connu de positionner le boîtier d'accessoires entre le générateur électrique et le générateur de gaz.

Toutefois, la zone intercalée entre le générateur électrique et le générateur de gaz se trouve difficilement exploitable. De plus, une telle solution nécessite un boîtier d'accessoires ayant de grandes dimensions.

Par ailleurs, lors du passage de l'arbre moteur au travers du boîtier d'accessoires pour venir entrainer le générateur électrique, ledit générateur électrique peut se trouver centré sur l'axe du générateur de gaz, ce qui limite alors l'espace disponible pour les accessoires.

On pourra se référer au document US 5, 309, 708 qui décrit un générateur électrique relié à un générateur de gaz par l'intermédiaire d'un boîtier d'accessoires. Le document WO 2018/055287 A1 décrit encore un autre groupe auxiliaire.

Il existe donc un besoin d'optimiser, en termes d'encombrement, l'intégration d'un boîtier d'accessoires dans un groupe axillaire de puissance.

### Exposé de l'invention

La présente invention a donc pour but de palier les inconvénients des groupes auxiliaires de puissance précités et de proposer un groupe auxiliaire de puissance compact ayant un encombrement latéral réduit.

L'invention a donc pour objet un groupe auxiliaire de puissance, notamment pour aéronef, comprenant un générateur de gaz et un générateur électrique comportant un arbre d'entrée relié à un arbre de sortie du générateur de gaz.

Le groupe auxiliaire de puissance comprend un boîtier d'accessoires relié directement à un arbre de rotor du générateur électrique, le générateur électrique étant intercalé entre le générateur de gaz et ledit boîtier d'accessoires.

En d'autres termes, le générateur de gaz est en prise directe avec le générateur électrique, sans aucun élément intermédiaire.

Le positionnement du boîtier d'accessoires permet de limiter l'encombrement radial du groupe auxiliaire de puissance. En effet, il n'est plus nécessaire de désaxer les accessoires.

Selon un mode de réalisation avantageux, le boîtier d'accessoires comprend un carter.

Par exemple, le carter présente sensiblement la forme d'un disque de diamètre inférieur ou égal au diamètre du générateur d'électricité.

Selon un mode de réalisation, le boîtier d'accessoires comprend un pignon central monté dans le carter et couplé à l'arbre du rotor du générateur électrique.

Par exemple, l'arbre du pignon central est emmanché sur l'arbre de rotor du générateur électrique.

Selon un mode de réalisation, le boîtier d'accessoires comprend au moins deux mécanismes de réduction couplés chacun au pignon central et à un arbre d'entrainement pour l'entraînement en rotation d'un accessoire correspondant.

On notera que la présente invention n'est pas limitée à la structure du boîtier d'accessoires.

Le boîtier d'accessoires est, par exemple, réalisé par usinage d'une pièce métallique.

Selon un mode de réalisation, le générateur de gaz comprend une turbine à gaz et un compresseur d'air principal entrainé en rotation par ladite turbine à gaz.

Le générateur de gaz peut comprendre un compresseur de charge monté axialement entre le compresseur d'air principal et le générateur électrique.

Par exemple, l'arbre d'entrée du générateur électrique est coaxial avec l'arbre de sortie du générateur de gaz et solidaire en rotation de celui-ci.

Dans le cas où le générateur de gaz est dépourvu d'un compresseur de charge, l'arbre d'entrée du générateur électrique est relié directement à l'arbre de sortie du générateur de gaz, de façon à ce que le générateur électrique soit en prise directe avec le générateur de gaz.

Selon un second aspect, l'invention concerne une turbomachine pour aéronef comprenant au moins un groupe auxiliaire de puissance tel que décrit précédemment.

### Brève description des dessins

D'autres buts, caractéristiques et avantages de l'invention apparaîtront à la lecture de la description suivante, donnée uniquement à titre d'exemple non limitatif, et faite en référence aux dessins indexés sur lesquels :
[Fig 1] illustre très schématiquement un groupe auxiliaire de puissance selon un mode de réalisation de l'invention ;
[Fig 2] est une vue de côté du groupe auxiliaire de puissance de la figure 1 ;
[Fig 3] illustre en détails un groupe auxiliaire de puissance selon un mode de réalisation de l'invention ; et
[Fig 4] est une vue de côté du groupe auxiliaire de puissance de la figure 2.

Dans la suite de la description, les termes « amont » et « aval » sont définis par rapport au sens de circulation de l'air dans le groupe auxiliaire de puissance.

### Exposé détaillé d'au moins un mode de réalisation

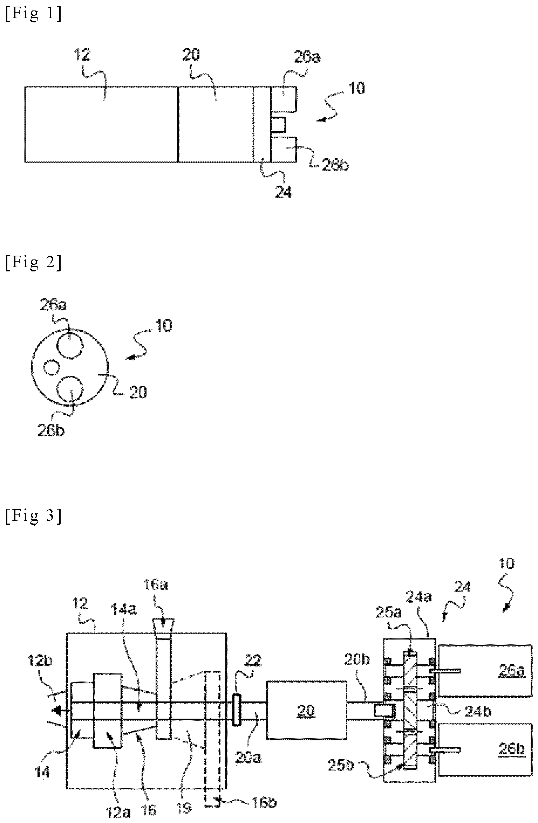

Sur la figure 1 est représenté, très schématiquement, un groupe auxiliaire de puissance 10, pour une turbomachine d'aéronef.

Le groupe auxiliaire de puissance 10 est généralement utilisé pour alimenter en énergie électrique ou pneumatiques différents systèmes lorsque l'aéronef est au sol ou en vol. Par exemple, un groupe auxiliaire de puissance utilisé en mode turbogénérateur délivrera exclusivement de l'énergie électrique afin de contribuer à l'alimentation de la chaine de propulsion hybride d'un aéronef.

Le groupe auxiliaire de puissance est, par exemple positionné à l'arrière de l'aéronef, notamment dans le cône de queue, et alimenté par le kérosène des réservoirs de l'aéronef.

Tel qu'illustré, le groupe auxiliaire de puissance 10 comprend, dans le sens axial d'aval en amont, un générateur de gaz 12, une génératrice ou générateur électrique 20 couplé au générateur de gaz 12 pour fournir de l'énergie électrique à bord de l'aéronef et un boîtier d'accessoires ou d'engrenages 24, connu sous le nom de « accessory gearbox », d'acronyme AGB en termes anglo-saxons, disposé en amont du générateur électrique 20 et couplé audit générateur électrique 20.

Le générateur de gaz 12, le générateur électrique 20 et le boîtier d'accessoires 24 sont coaxiaux

Le boîtier d'accessoires 24 comprend un mécanisme de réduction (non visible sur les figures 1 et 2) relié à différents équipements ou accessoires 26a, 26b, tels que, par exemple un générateur électrique, des pompes à carburant, un groupe de lubrification, un démarreur, ou d'autres accessoires auxiliaires au moteur et à la génération de puissance de l'aéronef.

Tel que l'on peut le voir sur la figure 2, le boîtier d'accessoires 24 comprend un carter présentant une forme géométrique simple dont l'encombrement en section radiale est sensiblement le même que celui du générateur d'électricité 20. Par exemple, ce carter peut présenter la forme d'un disque de diamètre sensiblement égal au diamètre du générateur d'électricité 20. Ainsi, on limite l'encombrement radial du boitier d'accessoires 24.

La figure 3 représente en détails un exemple de générateur de gaz 12 et de boîtier d'accessoires 24 utilisés dans le groupe auxiliaire de puissance 10. On notera que l'invention n'est pas limitée à un tel exemple.

Tel qu'illustré, le générateur de gaz 12 comprend une turbine à gaz 14 comprenant un arbre principal 14a couplé en rotation à un compresseur d'air principal 16. Le compresseur d'air principal 16 comprend une entrée d'air 16a. Le générateur de gaz 12 comprend en outre une section 12a de chambre de combustion et une tuyère d'échappement 12b en aval de la turbine à gaz 14 pour évacuer les produits de combustion selon la flèche représentée sur la figure 3.

Dans l'exemple illustré, l'arbre de sortie de la turbine à gaz 14 et l'arbre d'entrée du compresseur d'air principal 16 sont un arbre commun 14a. En variante, on pourrait prévoir un arbre de sortie de la turbine à gaz 14 distinct de l'arbre d'entrée du compresseur d'air principal 16 et couplé audit arbre d'entrée par un système de couplage.

De manière non limitative, le générateur de gaz 12 peut également comprendre un compresseur de charge 19, représenté en pointillés sur la figure 3, couplé à l'arbre 14a de la turbine à gaz 14. Le compresseur de charge 19 est configuré pour fournir de l'air pressurisé à bord de l'aéronef.

Tel qu'illustré, le générateur de gaz 12 comprend une sortie d'air 16b en amont du compresseur de charge 19 dans le cas où un compresseur de charge est présent.

Dans le cas où le compresseur de charge 19 n'est pas présent, l'arbre 14a de la turbine à gaz 14 est couplé directement à l'arbre d'entrée 20a du générateur électrique 20, à l'aide d'un deuxième système de couplage 22. Ce dernier peut consister par exemple en un système d'accouplement par cannelures entre les deux arbres 14a et 20a ou encore en un système de liaison souple permettant d'amortir les vibrations transmises de l'arbre 14a vers l'arbre d'entrée 20a. Ainsi, le générateur de gaz 12 est en prise directe avec le générateur électrique 20, sans aucun élément intermédiaire de prélèvement d'énergie mécanique du générateur de gaz tel qu'un compresseur de charge ou un boîtier d'accessoires.

Le générateur électrique 20 comprend en outre un arbre de sortie 20b ou arbre de rotor relié directement au boîtier d'accessoires 24.

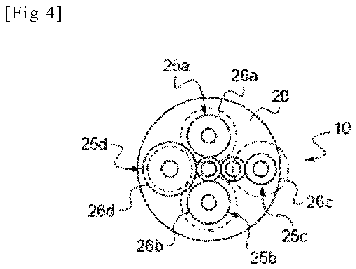

Tel qu'illustré sur les figures 3 et 4, le boîtier d'accessoires 24 comprend un carter 24a dans lequel est monté un pignon central 24b couplé à l'arbre du rotor 20b du générateur électrique 20 et par exemple quatre mécanismes de réduction 25a, 25b, 25c, 25d dont seuls deux sont visibles sur la figure 3. Chacun des mécanismes de réductions 25a, 25b, 25c, 25d est couplé au pignon central 24b et à un arbre d'entrainement pour l'entraînement en rotation d'un accessoire correspondant 26a, 26b, 26c, 26d. Les pourtours des corps des accessoires 26a, 26b, 26c, 26d sont représentés par des traits en pointillés sur la figure 4, ce qui montre un exemple d'une optimisation de l'espace occupé par ces accessoires. Le nombre de mécanismes de réduction est lié au nombre d'accessoires à entraîner, et peut bien sûr être différent de quatre.

L'arbre du pignon central 24b peut être emmanché, par exemple à l'aide de cannelures, sur l'arbre de rotor 20b du générateur électrique 20.

Un tel boîtier d'accessoires n'a plus pour fonction de servir de réservoir d'huile qui peut alors être déporté. Le boîtier d'accessoires 24 a donc pour seule fonction d'entrainement des accessoires et peut ainsi être réalisé par usinage d'une pièce métallique, sans avoir recours à des procédés de fonderie coûteux.

Le positionnement du boîtier d'accessoires 24 à l'arrière du générateur électrique 20 permet de retenir le rotor du générateur électrique à l'intérieur de son stator en cas de défaillance. En effet, en cas de rupture mécanique d'un rotor à grande vitesse, le flasque arrière de la machine électrique est généralement arraché, ce qui peut entrainer l'éjection du rotor. Le boîtier d'accessoires 24 permet donc d'éviter l'éjection axiale du rotor en remplissant la fonction de blocage du rotor.

Grâce à l'invention, le boîtier d'accessoires 24 peut être particulièrement compact radialement. Il peut supporter des accessoires relativement peu désaxés par rapport à un axe central du boîtier 24, par comparaison avec l'état de la technique.

Le positionnement à l'arrière de pompes hydrauliques sur le boîtier d'accessoires 24 permet de faire transiter les flux, notamment l'huile et le carburant, par les équipements électriques et électroniques du générateur électrique 20, afin d'assurer le refroidissement des équipements sensibles aux températures élevées.

Le positionnement du boîtier d'accessoires 24 présente également l'intérêt de pouvoir entrainer un ventilateur de refroidissement par exemple pour un échangeur de chaleur.

Enfin, contrairement aux boîtiers d'accessoires connus de l'état de la technique, le boîtier d'accessoires selon l'invention ne réalise plus la fonction de maintien mécanique du groupe auxiliaire de puissance sur l'aéronef, qui est à présent réalisée par le biais du carter du générateur électrique.

## Revendications

1. Groupe auxiliaire de puissance pour aéronef, comprenant un générateur de gaz (12) et un générateur électrique (20) comportant un arbre d'entrée (20a) relié à un arbre de sortie (14a) du générateur de gaz (12) le groupe auxiliaire comprenant un boîtier d'accessoires (24), le générateur électrique (20) étant intercalé entre le générateur de gaz (12) et ledit boîtier d'accessoires (24), **caractérisé en ce que** le générateur électrique (20) comporte en outre un arbre de rotor (20b), le boitier d'accessoires (24) étant relié directement à l'arbre de rotor (20b) du générateur électrique (20).

2. Groupe auxiliaire de puissance selon la revendication 1, dans lequel le boîtier d'accessoires (24) comprend un carter (24a).

3. Groupe auxiliaire de puissance selon la revendication 2, dans lequel le carter (24a) présente des dimensions radiales sensiblement inférieures ou égales aux dimensions radiales du générateur d'électricité (20).

4. Groupe auxiliaire de puissance selon la revendication 2 ou 3, dans lequel le boîtier d'accessoires (24) comprend un pignon central (24b) monté dans le carter et couplé à l'arbre de rotor (20b) du générateur électrique (20).

5. Groupe auxiliaire de puissance selon la revendication 4, dans lequel l'arbre du pignon central (24b) est emmanché sur l'arbre de rotor (20b) du générateur électrique (20).

6. Groupe auxiliaire de puissance selon la revendication 4 ou 5, dans lequel le boîtier d'accessoires (24) comprend au moins deux mécanismes de réduction (25a, 25b) couplés chacun au pignon central (24b) et à un arbre d'entrainement pour l'entraînement en rotation d'un accessoire correspondant (26a, 26b).

7. Groupe auxiliaire de puissance selon l'une quelconque des revendications précédentes, dans lequel le boîtier d'accessoires (24) est réalisé par usinage d'une pièce métallique.

8. Groupe auxiliaire de puissance selon l'une quelconque des revendications précédentes, dans lequel le générateur de gaz (12) comprend une turbine à gaz (14) et un compresseur d'air principal (16) entrainé en rotation par ladite turbine à gaz (14).

9. Groupe auxiliaire de puissance selon la revendication 8, dans lequel le générateur de gaz (12) comprend un compresseur de charge (19) monté axialement entre le compresseur d'air principal (16) et le générateur électrique (20).

10. Groupe auxiliaire de puissance selon l'une quelconque des revendications précédentes, dans lequel l'arbre d'entrée (20a) du générateur électrique (20) est coaxial avec l'arbre de sortie (14a) du générateur de gaz (12) et solidaire en rotation de celui-ci.

11. Groupe auxiliaire de puissance selon l'une quelconque des revendications 1 à 8, dans lequel l'arbre d'entrée (20a) du générateur électrique (20) est relié directement à l'arbre de sortie (14a) du générateur de gaz (12), de façon à ce que le générateur électrique (20) soit en prise directe avec le générateur de gaz (12).

12. Turbomachine pour aéronef comprenant au moins un groupe auxiliaire de puissance selon l'une quelconque des revendications précédentes.

## Patentansprüche

1. Hilfsstromaggregat für Flugzeuge, umfassend einen Gasgenerator (12) und einen elektrischen Generator (20), der eine Eingangswelle (20a) enthält, die mit einer Abtriebswelle (14a) des Gasgenerators (12) verbunden ist, wobei das Hilfsaggregat ein Zubehörgehäuse (24) umfasst, wobei der elektrische Generator (20) zwischen den Gasgenerator (12) und das Zubehörgehäuse (24) eingefügt ist, **dadurch gekennzeichnet, dass** der elektrische Generator (20) ferner eine Rotorwelle (20b) enthält, wobei das Zubehörgehäuse (24) direkt mit der Rotorwelle (20b) des elektrischen Generators (20) verbunden ist.

2. Hilfsstromaggregat nach Anspruch 1, wobei das Zubehörgehäuse (24) ein Gehäuse (24a) umfasst.

3. Hilfsstromaggregat nach Anspruch 2, wobei das Gehäuse (24a) radiale Abmessungen aufweist, die im Wesentlichen kleiner oder gleich den radialen Abmessungen des elektrischen Generators (20) sind.

4. Hilfsstromaggregat nach Anspruch 2 oder 3, wobei das Zubehörgehäuse (24) ein Sonnenrad (24b) umfasst, das in dem Gehäuse montiert und mit der Rotorwelle (20b) des elektrischen Generators (20) gekoppelt ist.

5. Hilfsstromaggregat nach Anspruch 4, wobei die Welle des Sonnenrads (24b) auf die Rotorwelle (20b) des elektrischen Generators (20) aufgesteckt ist.

6. Hilfsstromaggregat nach Anspruch 4 oder 5, wobei das Zubehörgehäuse (24) mindestens zwei Reduktionsmechanismen (25a, 25b) umfasst, die jeweils mit dem Sonnenrad (24b) und einer Antriebswelle zu dem Drehantrieb eines entsprechenden Zubehörbauteils (26a, 26b) gekoppelt sind.

7. Hilfsstromaggregat nach einem der vorhergehenden Ansprüche, wobei das Zubehörgehäuse (24) durch Bearbeitung eines Metallteils hergestellt wird.

8. Hilfsstromaggregat nach einem der vorhergehenden Ansprüche, wobei der Gasgenerator (12) eine Gasturbine (14) und einen Hauptluftkompressor (16) umfasst, der von der Gasturbine (14) in drehangetrieben wird.

9. Hilfsstromaggregat nach Anspruch 8, wobei der Gasgenerator (12) einen Ladekompressor (19) umfasst, der axial zwischen dem Hauptluftkompressor (16) und dem elektrischen Generator (20) montiert ist.

10. Hilfsstromaggregat nach einem der vorhergehenden Ansprüche, wobei die Eingangswelle (20a) des elektrischen Generators (20) koaxial zur Abtriebswelle (14a) des Gasgenerators (12) liegt und drehfest mit dieser verbunden ist.

11. Hilfsstromaggregat nach einem der Ansprüche 1 bis 8, wobei die Eingangswelle (20a) des elektrischen Generators (20) direkt mit der Abtriebswelle (14a) des Gasgenerators (12) verbunden ist, so dass der elektrische Generator (20) in direktem Eingriff mit dem Gasgenerator (12) steht.

12. Turbomaschine für Flugzeuge, die mindestens ein Hilfsstromaggregat nach einem der vorhergehenden Ansprüche umfasst.

## Claims

1. Auxiliary power unit for aircraft, comprising a gas generator (12) and an electric generator (20) comprising an input shaft (20a) connected to an output shaft (14a) of the gas generator (12), the auxiliary unit comprising an accessory box (24), the electric generator (20) being interposed between the gas generator (12) and the accessory box (24), **characterised in that** the electric generator (20) further comprises a rotor shaft (20b), the accessory box (24) being directly connected to the rotor shaft (20b) of the electric generator (20).

2. Auxiliary power unit according to claim 1, wherein the accessory box (24) comprises a housing (24a).

3. Auxiliary power unit according to claim 2, wherein the housing (24a) has radial dimensions substantially less than or equal to the radial dimensions of the electric generator (20).

4. Auxiliary power unit according to claim 2 or 3, wherein the accessory box (24) comprises a central pinion (24b) mounted in the housing and coupled to the rotor shaft (20b) of the electric generator (20).

5. Auxiliary power unit according to claim 4, wherein the shaft of the central pinion (24b) is press-fitted onto the rotor shaft (20b) of the electric generator (20).

6. Auxiliary power unit according to claim 4 or 5, wherein the accessory box (24) comprises at least two reduction mechanisms (25a, 25b), each coupled to the central pinion (24b) and to a drive shaft for the rotational drive of a corresponding accessory (26a, 26b).

7. Auxiliary power unit according to any one of the preceding claims, wherein the accessory box (24) is made by machining a metal part.

8. Auxiliary power unit according to any one of the preceding claims, wherein the gas generator (12) comprises a gas turbine (14) and a main air compressor (16) driven in rotation by said gas turbine (14).

9. Auxiliary power unit according to claim 8, wherein the gas generator (12) comprises a charge compressor (19) mounted axially between the main air compressor (16) and the electric generator (20).

10. Auxiliary power unit according to any one of the preceding claims, wherein the input shaft (20a) of the electric generator (20) is coaxial with the output shaft (14a) of the gas generator (12) and rotatably secured thereto.

11. Auxiliary power unit according to any one of claims 1 to 8, wherein the input shaft (20a) of the electric generator (20) is connected directly to the output shaft (14a) of the gas generator (12) so that the electric generator (20) is in direct engagement with the gas generator (12).

12. Aircraft turbomachine comprising at least one auxiliary power unit according to any one of the preceding claims.
